# EUROPEAN PATENT SPECIFICATION

(11) **EP 3 072 664 B1**
(45) Date of publication and mention of the grant of the patent: **31.01.2018**
(21) Application number: 16161427.6
(22) Date of filing: 21.03.2016
(51) Int. Cl.: B29C 45/17, B29C 45/76

(54) **INJECTION MOLDING MACHINE**
SPRITZGIESSMASCHINE
MACHINE DE MOULAGE À INJECTION

(30) Priority: 27.03.2015 JP 2015067682
(43) Date of publication of application: 28.09.2016
(73) Proprietor: SUMITOMO HEAVY INDUSTRIES, LTD., Tokyo 141-6025 (JP)
(72) Inventor: SUZUKI, Motofumi, Chiba 263-0001 (JP)
(74) Representative: Louis Pöhlau Lohrentz

(56) References cited:
- DE-A1-102009 007 559
- US-A- 5 536 159
- US-A- 5 666 010
- US-A1- 2008 021 678
- US-A1- 2011 106 288

## Description

### BACKGROUND OF THE INVENTION

### Field of the Invention

Certain embodiment relates to an injection molding machine.

### Description of Related Art

Injection molding machines have a mold clamping unit that performs mold clamping, mold closing, and mold opening of a mold unit, and an injection unit that fills a cavity space of the mold unit with a molding material (for example, refer to Japanese Unexamined Patent Application Publication No. 2014-100896). A take-out robot is disposed around the injection molding machine. The take-out robot has a take-out chuck that holds a molding product, and moves the take-out chuck, thereby taking out the molding product from an injection molding machine.

In order to manufacture various types of molding products, setup work, such as replacement of the mold unit, replacement of the molding material, and replacement of the take-out chuck of the take-out robot, is performed. The setup work is referred to as changing setups. A user confirms the type of mold unit, the type of molding material, the type of take-out chuck, and the like before the start of molding after changing setups. US 5,536,159 discloses an injection molding machine. US 2008/0021678 A1 discloses a method for providing comprehensive documentation information of complex machines and systems, in particular an injection molding machine. US 2011/0106288 A1 discloses a system for use in performance of injection molding operations. DE 10 2009 007 559 A1 discloses a safe drive system and a method for safeguarding a drive system. US 5,666,010 discloses a safety system for machine tools.

In the related art, due to lack of confirmation before the start of molding, an erroneous setting may be performed, and defective products may come out.

### SUMMARY OF THE INVENTION

The invention has been made in view of the above problems, and a main object thereof is to provide an injection molding machine that improves the yield of molding products.

In order to solve the above problems, according to an aspect of the invention, there is provided an injection molding machine including a controller that controls a molding operation; and a reading unit that reads a certification code and outputs the read certification code to the controller. A combination of a plurality of kinds of information is embedded in the certification code, and the plurality of kinds of information correspond to a plurality of items confirmed by the controller before the start of the molding operation, wherein the plurality of items embedded in the certification code includes at least molding condition names and information of a mold unit and/or information of a molding material and/or information of a take-out robot.

According to one aspect of the invention, the injection molding machine that improves the yield of molding products is provided.

### BRIEF DESCRIPTION OF THE DRAWINGS

Fig. 1 is a view illustrating a state at the time of the completion of mold opening of an injection molding machine according to an embodiment.
Fig. 2 is a view illustrating a state at the time of the mold clamping of the injection molding machine according to the embodiment.
Fig. 3 is a flowchart illustrating the processing of a controller according to the embodiment.

### DETAILED DESCRIPTION OF THE INVENTION

Although an embodiment for carrying out the invention will be described below with reference to the drawings, the same or corresponding components will be designated by the same or corresponding reference signs, and the description thereof will be omitted.

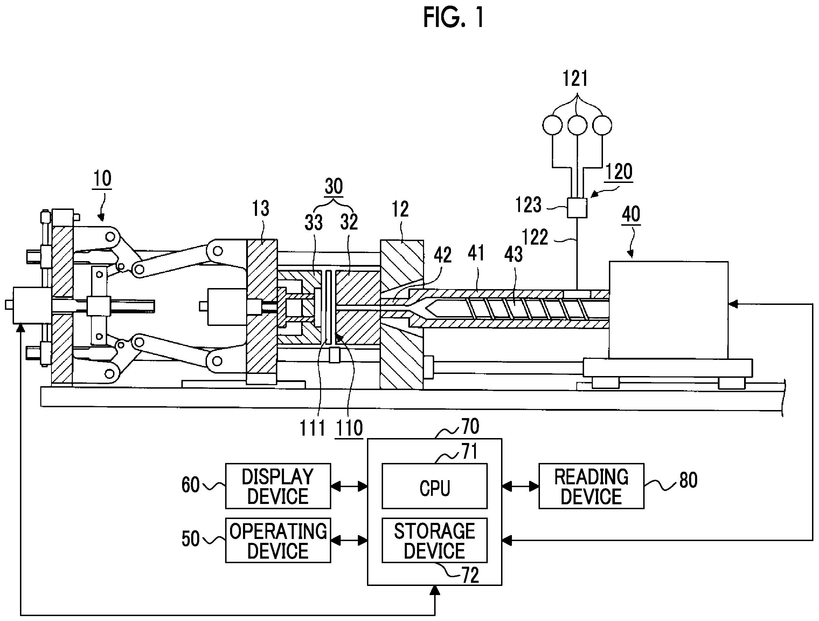

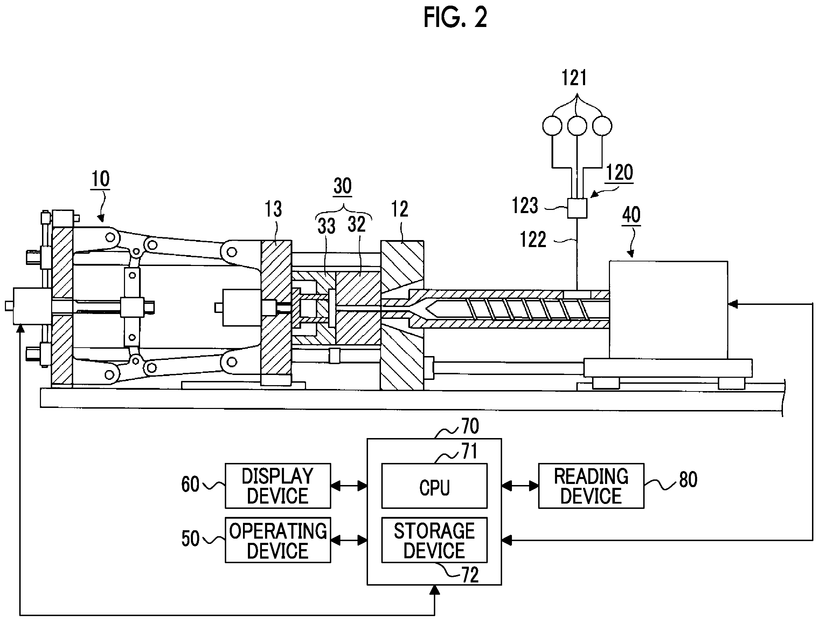

Fig. 1 is a view illustrating a state at the time of the completion of mold opening of an injection molding machine according to an embodiment. Fig. 2 is a view illustrating a state at the time of the mold clamping of the injection molding machine according to the embodiment.

The injection molding machine has a mold clamping unit 10, an injection unit 40, an operating unit 50, a display unit 60, a controller 70, a reading unit 80, and the like.

The mold clamping unit 10 has a stationary platen 12 to which a stationary mold 32 is attached, and a movable platen 13 to which a movable mold 33 is attached. The stationary mold 32 and the movable mold 33 constitute a mold unit 30.

The mold clamping unit 10 moves the movable platen 13 with respect to the stationary platen 12, thereby performing mold closing, mold clamping, and mold opening of the mold unit 30. A cavity space is formed between the stationary mold 32 and the movable mold 33 in a mold clamped state.

In addition, the mold clamping unit 10 of the present embodiment may be of a horizontal type in which a mold opening/closing direction is a horizontal direction, and the mold clamping unit 10 may be of a vertical type in which the mold opening/closing direction is a vertical direction. The vertical type mold clamping unit has a lower platen as the stationary platen, and an upper platen as the movable platen. A lower mold is attached to the lower platen, and an upper mold is attached to the upper platen. The lower mold and the upper mold constitute the mold unit. The lower mold may be attached to the lower platen via a rotary table.

The injection unit 40 has a cylinder 41 that heats a molding material, a nozzle 42 provided at a front end of the cylinder 41, and a screw 43 disposed so as to be movable forward and backward and rotatable within the cylinder 41.

The injection motor 40 rotates the screw 43, thereby feeding the molding material forward along a spiral groove of the screw 43. The molding material is gradually melted by the heat from the cylinder 41 while being fed forward. When the liquid molding material is fed to the front of the screw 43 and accumulated at a front part of the cylinder 41, the screw 43 is moved backward. If the screw 43 moves backward to a predetermined position and a predetermined amount of the molding material is accumulated in front of the screw 43, the injection unit 401 stops the rotation of the screw 43.

The injection unit 40 moves the screw 43 forward, thereby supplying the molding material in front of the screw 43 to the cavity space of the mold unit 30 via the nozzle 42. The liquid molding material supplied to the cavity space is cooled and solidified, and a molding product is obtained.

The molding product is taken out by a take-out robot 110 (refer to Fig. 1) after the mold opening. The take-out robot 110 has a take-out chuck 111 that holds the molding product, and moves the take-out chuck 111, thereby taking out the molding product from the injection molding machine. The take-out chuck 111 is made movable between a receiving position between the movable mold 33 and the stationary mold 32 after the mold opening, and a take-out position outside of the injection molding machine.

The injection unit 40 is connected to a molding material supply unit 120. The molding material supply unit 120 has a tank 121 that stores the molding material, a pipe 122 that connects the tank 121 and the cylinder 41 together, and a valve 123 provided in the middle of the pipe 122. The valve 123 opens and closes the pipe 122 or switches the tank 121 connected to the cylinder 41. The molding material supply unit 120 supplies the molding material within the tank 121 to a rear part of the cylinder 41 via the pipe 122 or the like.

In addition, although the injection unit 40 of the present embodiment is of an in-line screw type, the injection unit may be of a preplasticization type. The preplasticization type injection unit supplies a molding material melted within a plasticizing cylinder to an injection cylinder, and injects the molding material into the mold unit from the injection cylinder. The screw is disposed inside the plasticizing cylinder 3 so as to be rotatable or rotatable and movable forward and backward, and a plunger is disposed within the injection cylinder so as to be movable forward and backward.

The operating unit 50 and the display unit 60 are constituted of, for example, a touch panel, and may be integrated together. The operating unit 50 receives a user's input operation, and outputs a signal according to the input operation to the controller 70. The display unit 60 displays an operation screen according to the input operation in the operating unit 50 under the control performed by the controller 70. The operation screen is used for setting of molding conditions, and the like. A plurality of operation screens are prepared, and are switched and displayed or are displayed in an overlapping manner. A user operates the operating unit 50 while viewing an operation screen displayed by the display unit 60, thereby performing setting of molding conditions.

In addition, although the operating unit 50 and the display unit 60 of the present embodiment are integrated together, these units may be independently provided. Additionally a plurality of the operating units 50 may be provided.

The controller 70 has a central processing unit (CPU) 71, and a storage medium 72, such as a memory. The controller 70 makes the CPU 71 execute a program stored in the storage medium 72, thereby controlling the mold clamping unit 10, the injection unit 40, the operating unit 50, the display unit 60, and the like.

The reading unit 80 reads codes, such as a one-dimensional code or a two-dimensional code, and outputs the codes to the controller 70. The two-dimensional code may be of any of a matrix type and a stack type. The matrix type two-dimensional code may include QR Code (registered trademark), SP Code (registered trademark), VeriCode (registered trademark), MaxiCode (registered trademark), CP Code (registered trademark), DataMatrix, Code1, or the like. The stack type two-dimensional code may include PDF417 (registered trademark), Micro PDF417, Code49, SuperCode, Ultra Code, RSS Composite, AztecMesa, or the like.

The reading unit 80 reads a certification code and outputs the certification code to the controller 70. The certification code is posted up to a medium, such as paper. A screen of a portable terminal, such as a cellular phone, may be used as the medium. A combination of a plurality of kinds of information is embedded in the certification code, and the plurality of kinds of information correspond to a plurality of items confirmed by the controller 70 before the start of a molding operation.

The above items include, for example, "molding condition names", a "mold unit", a "molding material", a "take-out chuck", and the like.

The "molding condition names" are names given to the molding conditions by a user. The names and the molding conditions are matched with each other and stored in the storage medium 72, and are read and used from the storage medium 72. The molding condition names are given according to, for example, types of molding products.

Information of the "mold unit" includes the type or the like of the mold unit 30. The mold unit 30 is replaced according to the type of molding product.

Information of the "molding material" includes the type of molding material, the connected state between the injection unit 40 and the molding material supply unit 120, and the like. The molding material is changed according to the type of molding product. The connected state between the injection unit 40 and the molding material supply unit 120 is changed with the change of the molding material. This change includes, for example, (1) the separation or coupling between the cylinder 41 and the pipe 122, and (2) a change in the state of the valve 123, and the like.

Information of the "take-out chuck" includes the type of take-out chuck 111, and the like. The take-out chuck 111 is replaced according to the type of molding product.

The controller 70 performs confirmation for the above items before the start of the molding operation. The confirmation is performed by collating the information of the certification code with the information of the other information sources. Hence, defective molding caused by erroneous setting at the time of changing setups can be reduced, and the yield of molding products can be improved.

In addition, the type and number of the above items can be changed appropriately. This change may be permitted only by an authorized user.

The controller 70 may acquire information (hereinafter also referred to as collation information) to be collated with the information of the certification code from a different information source for each item. For example, an information source of the collation information of the "molding condition names" is the storage medium 72, an information source of the collation information of the "mold unit" is a mold code, a information source of the collation information of the "molding material" is a molding material code, and an information source of the collation information of the "take-out chuck" is a take-out chuck code.

The controller 70 may acquire the collation information by reading a code given to a unit relating to the collation information by the reading unit 80. Although a method of giving a code to a unit is not particularly limited, for example, a method of performing printing on paper or the like and pasting the printed paper on the unit, a method of directly performing printing on the unit, or the like are used.

The mold code is given to, for example, the mold unit 30. The mold code may be given to any of the stationary mold 32 and the movable mold 33 or may be given to both of the molds.

The molding material code is given to, for example, at least one of the molding material supply unit 120 and the injection unit 40. The molding material code may be given to any of the tank 121 of the molding material supply unit 120, the pipe 122, the valve 123, and the cylinder 41 of the injection unit 40, or may be given to a plurality of members.

In addition, in a case where a hopper is connected to the cylinder 41 instead of the molding material supply unit 120, the molding material code may be given to a bag for a molding material to be charged into the hopper.

The take-out chuck code is given to, for example, the take-out chuck 111 of the take-out robot 110.

A user carries the reading unit 80 and brings the reading unit closer to a unit to which a code is given. Hence, a user can be prompted to perform visual confirmation.

The controller 70 may release the prohibition of the molding operation in a case where the collation information matches the information of the certification code in all of the items. The molding operation is prohibited until the collation information that matches the information of the certification code is acquired, in all of the items.

The molding operation that is temporarily prohibited may not be the entire molding operation. For example, the molding operation to be prohibited may be a full automatic operation for repeatedly and automatically manufacturing molding products, and a manual operation required for changing setups may be prohibited.

If a selective operation or the like of the molding condition names used for the control of the molding operation is detected, the controller 70 may determine that the rebooting has been performed and may prohibit the molding operation, such as the full automatic operation again. The selective operation of the molding condition names used for the control of the molding operation is performed by, for example, a user's input operation. The controller 70 can monitor the input operation of the operating unit 50 by a user, thereby detecting the selective operation of the molding condition names.

The controller 70 may display the information of the certification code on the screen of the display unit 60. For example, the controller may display the information of the certification code, the collation information, collation results (match, mismatch, and the like), and the like on the screen of the display unit 60 for each item.

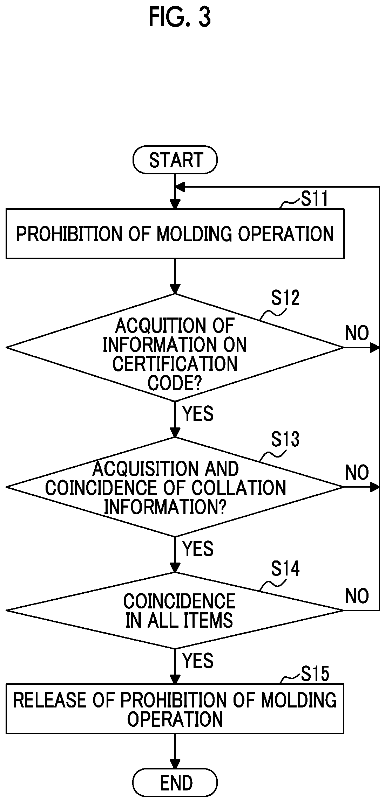

Fig. 3 is a flowchart illustrating the processing of the controller according to the embodiment. The processing of this flowchart is started in a case where a selective operation or the like of molding condition names used for the control of a molding operation before the start of the molding operation, such as a full automatic operation, is performed.

First, in Step S11 of Fig. 3, the controller 70 prohibits the molding operation, such as the full automatic operation, and proceeds to Step S12.

In Step S12, the controller 70 confirms whether or not the information of a certification code has been acquired after the start of processing of Fig. 3. A combination of a plurality of kinds of information is embedded in the certification code, and the plurality of kinds of information correspond to a plurality of items confirmed by the controller 70 before the start of the molding operation. The above items include, for example, "molding condition names", a "mold unit", a "molding material", a "take-out chuck", and the like.

In a case where the information of the certification code is not acquired in the above Step S12 (Step S12, NO), the controller 70 returns to Step S11, and continues processing after Step S11.

On the other hand, in a case where the information of the certification code is acquired in the above Step S12 (Step S12, YES), the controller 70 proceeds to Step S13.

In Step S13,the controller 70 confirms whether collation information is acquired and the collation information matches the information of the certification code. The collation information may be acquired from different information sources for each item. For example, the collation information of the "molding condition names" is acquired from the storage medium 72, the collation information of the "mold unit" is acquired from a mold code, the collation information of the "molding material" is acquired from a molding material code, and the collation information of the "take-out chuck" is acquired from a take-out chuck code.

In the above Step S13, in a case where the collation information is not acquired or in a case where the collation information is acquired but does not match the information of the certification code (Step S13, NO), the controller 70 returns to Step S11 and continues the processing after Step S11.

On the other hand, in the above Step S13, in a case where the collation information is acquired and the collation information matches the information of the certification code (Step S13, YES), the controller 70 proceeds to Step S14.

In Step S14, the controller 70 confirms whether the information of the certification code and the collation information match each other for all of the items.

In the above Step S14, in a case where the information of the certification code and the collation information do not match each other for all of the items (Step S14, NO), the controller 70 returns to Step S11, and repeatedly continues the processing after Step S11.

On the other hand, in the above Step S14, in a case where the information of the certification code and the collation information match each other for all of the items (Step S14, YES), the controller 70 proceeds to Step S15, releases the prohibition of the molding operation, such as the full automatic operation, and ends this processing.

Although the embodiment of the injection molding machine has been described above, the invention is not limited to the above-described embodiment, and various alterations and improvements can be made within the scope of the invention described in the claims.

For example, the controller 70 may read information coinciding with the information of the "molding condition names" of the certification code from the storage medium 72, and displays the read information on the screen of the display unit 60, in a case where the information of the certification code is acquired using the reading unit 80. Molding conditions used for the control of the molding operation are forcedly changed.

Additionally, although the controller 70 acquires the collation information of the molding material by reading the molding material code with the reading unit 80, the controller may acquire the collation information of the molding material from a controller for the molding material supply unit 120.

Additionally, although the controller 70 acquires the collation information of the take-out chuck 111 by reading the take-out chuck code with the reading unit 80, the controller may acquire the collation information of the take-out chuck 111 from a controller for the take-out robot 110.

Additionally, the order of processing of the controller 70 is not limited to the order of Fig. 3. For example, any one of acquisition of the information of the certification code and acquisition of the collation information may be performed first, or acquisition of the information of the certification code may be performed after acquisition of a portion of the collation information and before acquisition of the remaining collation information. Additionally, the timing of the collation is not limited, either. Collation of each itemmaybeperformedwhenever the collation information is acquired, collection of only some items may be collectively performed in the stage where a plurality of kinds of collation information are acquired, or collation of all of the items may be performed at a time in a stage where all the collation information is acquired.

## Claims

1. An injection molding machine comprising:
a controller (70) that controls a molding operation; and
a reading unit (80) that reads a certification code and outputs the read certification code to the controller (70),
**characterized in that** a combination of a plurality of kinds of information is embedded in the certification code, and the plurality of kinds of information correspond to a plurality of items confirmed by the controller (70) before the start of the molding operation,
wherein the plurality of items embedded in the certification code includes at least molding condition names and information of a mold unit and/or information of a molding material and/or information of a take-out robot.

2. The injection molding machine according to Claim 1,
wherein the controller (70) acquires information to be collated with the information of the certification code from a different information source for each of the items.

3. The injection molding machine according to Claim 1 or 2,
wherein the controller (70) acquires information to be collated with the information of the certification code by reading a code given to a unit relating to the information by the reading unit.

4. The injection molding machine according to any one of Claims 1 to 3,
wherein the controller (70) releases prohibition of the molding operation in a case where information to be collated with the information of the certification code match the information of the certification code in all of the items.

5. The injection molding machine according to any one of Claims 1 to 4, further comprising:
a display unit (60) that displays a screen,
wherein the controller (70) controls the display unit (60) to display the information of the certification code.

6. The injection molding machine according to any one of Claims 1 to 4, wherein the certification code is posted on a medium such as paper or a screen of a portable terminal.

7. A method for controlling an injection molding machine according to Claim 2, the method comprising
- reading the certification code by the reading unit (80) and outputting the read certification code to the controller (70);
- acquiring information to be collated with the information of the certification code from a different information source for each of the items by the controller (70).

8. A method for controlling an injection molding machine according to Claim 7, the method comprising
- acquiring information to be collated with the information of the certification code by the controller (70) by reading a code given to a unit relating to the information by the reading unit.

9. A method for controlling an injection molding machine according to any one of Claims 7 or 8, the method comprising
- releasing prohibition of the molding operation by the controller (70) in a case where information to be collated with the information of the certification code match the information of the certification code in all of the items.

## Patentansprüche

1. Spritzgießmaschine, umfassend:
eine Steuerung (70), die einen Spritzgießvorgang steuert, und
eine Leseeinheit (80), die einen Zertifizierungscode liest und den gelesenen Zertifizierungscode an die Steuerung (70) ausgibt,
**dadurch gekennzeichnet, dass** eine Kombination einer Mehrzahl von Informationskategorien in dem Zertifizierungscode eingebettet ist und dass die Mehrzahl von Informationskategorien einer Mehrzahl von Komponenten entspricht, die durch die Steuerung (70) vor dem Beginn des Spritzgießvorgangs bestätigt werden,
wobei die Mehrzahl von in dem Zertifizierungscode eingebetteten Komponenten wenigstens Bezeichnungen von Spritzgießbedingungen und Informationen zu einer Werkzeugeinheit und/oder Informationen zu einem Gießwerkstoff und/oder Informationen zu einem Entnahmeroboter enthält.

2. Spritzgießmaschine nach Anspruch 1, worin die Steuerung (70) Informationen, die mit der Information des Zertifizierungscodes abzugleichen sind, für jeden der Komponenten von einer unterschiedlichen Informationsquelle erhält.

3. Spritzgießmaschine nach Anspruch 1 oder 2, worin die Steuerung (70) Informationen, die mit der Information des Zertifizierungscodes abzugleichen sind, erhält, indem ein Code gelesen wird, der einer mit der Information zusammenhängenden Einheit von der Leseeinheit gegeben wird.

4. Spritzgießmaschine nach einem der Ansprüche 1 bis 3, worin die Steuerung (70) eine Sperre für den Spritzgießvorgang in einem Fall aufhebt, in dem die Information, die mit der Information des Zertifizierungscodes abzugleichen ist, hinsichtlich aller Komponenten mit der Information des Zertifizierungscodes übereinstimmt.

5. Spritzgießmaschine nach einem der Ansprüche 1 bis 4, weiter umfassend eine Anzeigeeinheit (60), die einen Bildschirm anzeigt, worin die Steuerung (70) die Anzeigeeinheit (60) dahingehend steuert, dass diese die Information des Zertifizierungscodes anzeigt.

6. Spritzgießmaschine nach einem der Ansprüche 1 bis 4, worin der Zertifizierungscode auf einem Medium wie Papier oder einem Bildschirm eines tragbaren Terminals ausgegeben wird.

7. Verfahren zum Steuern einer Spritzgießmaschine nach Anspruch 2, wobei das Verfahren umfasst:
- Lesen des Zertifizierungscodes durch die Leseeinheit (80) und Ausgeben des gelesenen Zertifizierungscodes an die Steuerung (70)
- Erhalten von Informationen, die mit der Information des Zertifizierungscodes abzugleichen sind, durch die Steuerung (70) von einer unterschiedlichen Informationsquelle für jeden der Komponenten.

8. Verfahren zum Steuern einer Spritzgießmaschine nach Anspruch 7, wobei das Verfahren das Erhalten von Informationen, die mit der Information des Zertifizierungscodes abzugleichen sind, durch die Steuerung (70) umfasst, indem ein Code gelesen wird, der einer mit der Information zusammenhängenden Einheit von der Leseeinheit gegeben wird.

9. Verfahren zum Steuern einer Spritzgießmaschine nach einem der Ansprüche 7 oder 8, wobei das Verfahren das Aufheben einer Sperre für den Spritzgießvorgang durch die Steuerung (70) in einem Fall umfasst, in dem die Information, die mit der Information des Zertifizierungscodes abzugleichen ist, hinsichtlich aller Komponenten mit der Information des Zertifizierungscodes übereinstimmt.

## Revendications

1. Machine de moulage par injection comprenant :
un contrôleur (70) qui commande une opération de moulage ; et
une unité de lecture (80) qui lit un code de certification et délivre le code de certification lu au contrôleur (70),
**caractérisée en ce qu'**une combinaison d'une pluralité de types d'informations est intégrée dans le code de certification, et la pluralité de types d'informations correspondent à une pluralité d'éléments confirmés par le contrôleur (70) avant que le commencement de l'opération de moulage,
dans laquelle la pluralité d'éléments intégrés dans le code de certification comprend au moins des noms de condition de moulage et des informations d'une unité de moule et/ou des informations d'un matériau de moulage et/ou des informations d'un robot d'extraction.

2. Machine de moulage par injection selon la revendication 1,
dans laquelle le contrôleur (70) acquiert des informations à regrouper avec les informations du code de certification provenant d'une source d'informations différente pour chacun des éléments.

3. Machine de moulage par injection selon la revendication 1 ou 2,
dans laquelle le contrôleur (70) acquiert des informations à regrouper avec les informations du code de certification en lisant un code communiqué à une unité relatif aux informations par l'unité de lecture.

4. Machine de moulage par injection selon l'une quelconque des revendications 1 à 3,
dans laquelle le contrôleur (70) retire l'interdiction de l'opération de moulage dans un cas dans lequel les informations à regrouper avec les informations du code de certification correspondent aux informations du code de certification dans tous les éléments.

5. Machine de moulage par injection selon l'une quelconque des revendications 1 à 4, comprenant en outre :
une unité d'affichage (60) qui affiche une page d'écran,
dans laquelle le contrôleur (70) commande l'unité d'affichage (60) pour afficher les informations du code de certification.

6. Machine de moulage par injection selon l'une quelconque des revendications 1 à 4, dans laquelle le code de certification est affiché sur un support tel que du papier ou un page d'écran d'un terminal portable.

7. Procédé pour commander une machine de moulage par injection selon la revendication 2, le procédé comprenant :
- la lecture du code de certification par l'unité de lecture (80) et la fourniture du code de certification lu au contrôleur (70) ;
- l'acquisition d'informations à regrouper avec les informations du code de certification provenant d'une source d'informations différente pour chacun des éléments par le contrôleur (70).

8. Procédé pour commander une machine de moulage par injection selon la revendication 7, le procédé comprenant :
- l'acquisition d'informations à regrouper avec les informations du code de certification par le contrôleur (70) en lisant un code communiqué à une unité relatif aux informations par l'unité de lecture.

9. Procédé pour commander une machine de moulage par injection selon l'une quelconque des revendications 7 et 8, le procédé comprenant :
- le retrait de l'interdiction de l'opération de moulage par le contrôleur (70) dans un cas dans lequel les informations à regrouper avec les informations du code de certification correspondent aux informations du code de certification dans tous les éléments.
